# FASCICULE DE BREVET EUROPEEN

(11) **EP 0 976 849 B1**
(45) Date de publication et mention de la délivrance du brevet: **10.09.2003**
(21) Numéro de dépôt: 99401689.7
(22) Date de dépôt: 07.07.1999
(51) Int. Cl.: C23D 5/04, C03C 8/08, C03C 8/14

(54) **Procédé de traitement limitant la suroxydation des rives d'une bande de tôle laminée à chaud et bobinée en sortie d'un train à bandes**
Behandlungsverfahren zur Oxidierungsbeherrschung der Ränder warmgewalzter Stahlbänder an einem Warmbandstrassenausgang
Treatment process for limiting the oxidation of the edges of a hot rolled steel sheet coiled at the exit of the hot strip mill

(30) Priorité: 30.07.1998 FR 9809741
(43) Date de publication de la demande: 02.02.2000
(73) Titulaire: SOLLAC, 92800 Puteaux (FR)
(72) Inventeur: Morand, Claude, 13140 Miramas (FR)
(74) Mandataire: Neyret, Daniel Jean Marie

(56) Documents cités:
- EP-A- 0 736 334
- WO-A-99/52653
- FR-A- 2 083 650
- US-A- 3 671 278
- US-A- 3 759 240
- US-A- 5 512 521

## Description

L'invention concerne un procédé de traitement limitant la suroxydation des rives d'une bande de tôle laminée à chaud et bobinée en sortie d'un train à bande.
Dans les usines sidérurgiques, le refroidissement, avant décapage, des bandes de tôle d'acier, conditionnées sous la forme de bobines, nécessite des aires de stockage importantes. Le temps de refroidissement à l'air ambiant d'une bobine isolée est de l'ordre de 70 heures. Ce temps peut être encore plus important dans le cas où les bobines sont superposées. Dans certaines usines, les bobines sont immergées dans des piscines pour en accélérer le refroidissement. Cette technique a pour avantages de diminuer l'aire de stockage, le temps de stockage notamment entre le train à bandes et le décapage, et la durée du décapage, l'épaisseur de la calamine se formant sur les bandes d'acier étant plus faible au niveau des rives.

La calamine formée lors d'un laminage à chaud au train à bandes, entre 800°C et 700°C est composée de 3 oxydes qui ont chacun leur propre vitesse de croissance.

L'hématite, Fe₂O₃, en contact avec l'atmosphère, est le composé le plus oxydé. Pour une calamine de 10 µm d'épaisseur, formée à 700°C l'épaisseur du film d'hématite est de l'ordre de 0,01 µm.

FeO, en contact avec l'acier, est le composé le moins oxydé. Pour une calamine de 10 µm d'épaisseur, l'épaisseur du film de FeO formé est de l'ordre de 7,26 µm.

Entre ces deux oxydes, il se forme un composé du type spinelle formé par les deux oxydes précédents. L'épaisseur de cette spinelle, pour une épaisseur de calamine de 10 µm, est de 0,63 µm environ.

L'épaisseur de la calamine formée sur les aciers laminés à chaud dépend du temps de séjour sur la table de refroidissement, donc de la vitesse de bobinage, de la température du laminage et de la température de bobinage.

Au cours du refroidissement en bobine, au niveau des rives, l'oxygène présent entre les spires consécutives autorise la poursuite de l'oxydation, alors qu'au centre de la bobine, celle ci est stoppée rapidement.

Le centre de la bobine se refroidit très lentement. La vitesse de refroidissement est fonction en particulier de la masse de ladite bobine. La décomposition du FeO à l'abri de l'air est pratiquement totale, il est transformé en eutectoïde Fe₃O₄+ Fe.

Les rives subissent une suroxydation suivant la température de bobinage et la masse de la bobine. Cette suroxydation se fait par la formation d'un film d'hématite dont le temps de retrait détermine la durée de décapage.

La vitesse de refroidissement des rives étant plus rapide, la décomposition de FeO en eutectoïde n'est pas complète, et on observe la présence de magnétite.

Pour favoriser l'adhérence de la calamine en rives, il est nécessaire d'éviter la suroxydation et de se rapprocher de la structure de l'oxyde formant la calamine au centre de la bande bobinée.

Le refroidissement en piscine permet d'obtenir ce résultat mais a l'inconvénient d'une part d'être onéreux et d'autre part, de modifier les caractéristiques mécaniques de l'acier dont sont composées les bandes.

L'invention a pour but d'éviter la formation d'un film d'hématite sur les rives d'une bande de tôle d'acier laminée à chaud, sans modifier les caractéristiques mécaniques de l'acier, ce qui est un risque dans la technique de refroidissement en piscine.

L'invention à pour objet un procédé de traitement limitant la suroxydation des rives de bandes de tôle laminées à chaud et bobinées en sortie d'un train à bande, caractérisé en ce qu'on projette sur les parties latérales de la bobine, appelées tranches, une poudre qui se solidifie et assure l'étanchéité à l'air de l'espace contenu entre les spires de la bobine.

Les autres caractéristiques de l'invention sont :
- on projette sur les tranches de bobine une poudre vitrifiable, fondant lors de son contact avec la bobine d'acier en sortie du laminage à chaud, la bande de tôle étant en refroidissement à une température inférieur à la température de bobinage, le refroidissement de la bande assurant la solidification d'un émail étanche en surface des tranches de bobine,
- la poudre vitrifiable est mélangée avec un composé assurant à ladite poudre un comportement électrostatique et évitant l'adsorption d'eau,
- la poudre vitrifiable formant l'émail est un verre dont la composition est la suivante :
10% < Fe₂O₃ < 50%,
10% < Na₂B₄O₇ < 80%
0% < P₂O₅ < 10%
5% < SiO₂ < 50%
0% < TiO₂ < 15%
5% < Na₂CO₃ < 20%
5% < K₂CO₃ < 20%
0% < CaCO₃ < 10%,

- de préférence, la poudre vitrifiable formant émail est un verre dont la composition est la suivante :

| | |
|---|---|
| Fe₂O₃ | 30% |
| Na₂B₄O₇ | 15% |
| P₂O₅ | 3% |
| SiO₂ | 15% |
| TiO₂ | 9% |
| Na₂CO₃ | 11% |
| K₂CO₃ | 15% |
| CaCO₃ | 2%. |

- la poudre est vitrifiable, fondant lors de son contact avec la bobine d'acier en sortie du laminage à chaud, le refroidissement de la bande assurant la solidification d'un émail continu étanche en surface des tranches de bobine,
- elle a la composition d'un verre de composition générale suivante:
10% < Fe₂O₃ < 50%,
10% < Na₂B₄O₇ < 80%
0% < P₂O₅ < 10%
5% < SiO₂ < 50%
0% < TiO₂ < 15%
5% < Na₂CO₃ < 20%
5% < K₂CO₃ < 20%
0% < CaCO₃ < 10%,

- de préférence, elle a la composition d'un verre de composition suivante :

| | |
|---|---|
| Fe₂O₃ | 30% |
| Na₂B₄O₇ | 15% |
| P₂O₅ | 3% |
| SiO₂ | 15% |
| TiO₂ | 9% |
| Na₂CO₃ | 11% |
| K₂CO₃ | 15% |
| CaCO₃ | 2%. |

- la poudre est mélangée avec un composé assurant à ladite poudre un comportement électrostatique et évitant l'adsorption d'eau.

La description qui suit et la figure unique présentée, le tout donnée à titre d'exemple non limitatif, fera bien comprendre l'invention.

La figure unique présente l'aspect d'une partie d'une tranche de bobine après émaillage et refroidissement.

L'invention concerne un procédé de traitement limitant la suroxydation des rives de bandes de tôle laminées à chaud et bobinées en sortie d'un train à bande. Selon le procédé, on projette sur les parties latérales de la bobine, appelées tranches, une poudre qui se solidifie pour assurer l'étanchéité à l'air de l'espace contenu entre les spires de la bobine.

On projette sur les tranches de bobine une poudre vitrifiable, fondant lors de son contact avec la bobine d'acier en sortie du laminage à chaud, la bande de tôle étant en refroidissement à une température inférieure à la température de bobinage, le refroidissement de la bande assurant la solidification d'un émail continu, étanche, en surface des tranches de bobine. L'émail formé évite les entrées d'air entre les spires des bobines.

Dans un exemple d'application selon l'invention, l'émail a une température de fusion comprise entre 600°C et 630°C. En effet, bien que la température de bobinage à chaud soit de 700°C environ, le traitement peut se faire par exemple au premier basculeur, la température de la bobine étant au dessus de 630°C, soit environ 45 mn après le bobinage. Le décalage dans le temps entre le bobinage et la projection de la poudre de verre est lié à des raisons de pratiques industrielles.

La poudre vitrifiable, avant projection sur la tranche de la bobine au moyen d'un pistolet électrostatique, est mélangée avec un composé assurant à ladite poudre un comportement électrostatique. Le composé peut être également hydrofuge.

L'émail a la propriété de bien se détacher lors du déroulage des bobines et de ce fait n'encrasse pas les rouleaux.

Le verre utilisé dans le procédé selon l'invention a la composition suivante :
10% < Fe₂O₃ < 50%,
10% < Na₂B₄O₇ < 80%
0% < P₂O₅ < 10%
5% < SiO₂ < 50%
0% < TiO₂ < 15%
5% < Na₂CO₃ < 20%
5% < K₂CO₃ < 20%.
0% < CaCO₃ < 10%

La composition doit remplir les conditions de vitrification.

Les formateurs de réseau ont généralement un rayon ionique petit et une coordinence de 3 ou 4. L'ion silicium a un rayon ionique de 0,039 nm et une coordinence de 4. Il satisfait donc au qualité de formateur. Les cations Fe³⁺ ayant un rayon ionique de 0,067 nm ne peuvent pas, théoriquement, former un réseau.

Le rayon de l'ion Al³⁺ est de 0,057 nm et cet ion se situe à la limite entre les coordinence 4 et 6. De ce fait quand on introduit de l'alumine dans la composition d'un verre, les ions O²⁺ peu polarisable forcent les ions Al à la coordinence 6, qui ne peut être apte à la formation d'un réseau. Pourtant on peut obtenir des verres dans une structure silice plus alumine. En effet, en introduisant de l'alumine dans la composition d'un verre sodocalcique, on offre à l'ion Al la possibilité de se coordonner pour former des groupements AlO₄ à partir des oxygènes non pontants plus facilement polarisables, devenant ainsi un formateur de réseau.

Or on a remarqué que l'oxyde de fer Fe₂O₃ est un oxyde du même type que Al₂O₃. Le rayon ionique de Fe³⁺ est de 0,067 nm. Comme l'ion AI, cet ion se situe à la limite entre coordinence 4 et 6 et peut remplacer Al₂O₃ dans la composition de base de verres sodocalciques.

De ce fait, comme dans le cas de l'alumine, il a été suggéré l'introduction du Fe₂O₃ dans un verre sodocalcique de façon à offrir à l'ion Fe³⁺ la possibilité de se coordonner pour former des groupements FeO₄ à partir des oxygènes non pontants et devenir partiellement, formateur de réseau.

P₂O₅ est également un oxyde couramment utilisé en tant que formateur de réseau.

Dans la fabrication des verres, le rôle, bien connu, des oxydes alcalins, comme Na₂O et K₂O est d'affaiblir la structure et ils sont, de ce fait, des modificateurs de réseau. Il en est de même pour les oxydes alcalino-terreux parmi lesquels le plus utilisé est le CaO.

Les modificateurs ont la propriété de baisser la température de fusion de verre.

L'émail selon l'invention, doit fondre dès 630°C température inférieure à la température de fusion de l'oxyde de fer Fe₂O₃.
Dans une composition préférée selon l'invention du type

| | |
|---|---|
| Fe₂O₃ | 30%, |
| Na₂B₄O₇ | 15% |
| P₂O₅ | 3% |
| SiO₂ | 15% |
| TiO₂ | 9% |
| Na₂CO₃ | 1 1 % |
| K₂CO₃ | 15% |
| CaCO₃ | 2% |

l'émail conserve sa structure vitreuse avec 30% de fer et 15% de silice. Cet émail fond à une température inférieure à 630°C.

La fritte de verre obtenue par fusion et coulée est ensuite séchée puis broyée.
Pour rendre la poudre de ce verre électrostatique et faciliter sa projection au moyen d'un pistolet électrostatique, il est introduit, au cours du broyage de la fritte, un produit du type diphénylsilanediol, à raison de 3,5% en masse. Le but est d'augmenter la résistivité et d'éviter l'adsorption d'eau par la poudre.

Sans l'émaillage, l'épaisseur de la calamine sur les rives, a une épaisseur de 27µm environ.

Quand on émaille les deux tranches d'une bobine avec un verre contenant 15% de silice, la couche de calamine entre les spires a une épaisseur de 13 µm. C'est l'épaisseur normale de la couche d'oxyde, sans Fe₂O₃ Avec un émail contenant 12% de silice, il se forme sur les rives une calamine dont l'épaisseur est de 20 µm. Ce qui prouve que l'émail formé est poreux et n'empêche pas la formation d'hématite.

Avec un émail contenant de 15 et 20% de silice, l'épaisseur de la calamine est de l'ordre de 12 à 13 µm, sans formation d'hématite, il n'y a pas suroxydation.

L'émail selon l'invention bloque la formation d'oxyde, entre les spires de la bobine, le temps de décapage de ladite bobine peut être ainsi réduit de moitié.

Du point de vue de l'adhérence, des mesures ont été effectuées pour caractériser l'émail.

L'émail déposé à partir d'une poudre de verre contenant 12% de silice a une bonne adhérence.

L'émail déposé à partir d'une poudre de verre contenant 15% de silice a une mauvaise adhérence.

L'émail déposé a partir d'une poudre de verre contenant 20% de silice a une adhérence relative acceptable.

Il faut tenir compte que le critère recherché dans la procédé selon l'invention est une mauvaise adhérence de l'émail, pour l'élimination de cet émail après refroidissement de la bobine au cours du déroulage à l'entrée du décapage. Avec une trop faible teneur en silice, on perd le caractère vitreux de l'émail, la couche déposée sur la tranche est d'une structure cristalline, moins fragile et plus adhésive.

L'adhérence de l'émail réalisé avec un verre contenant 20% de silice est un peu plus élevée que celle de l'émail contenant 15% de silice. Cela est dû au fait que la dissolution du fer dans l'émail s'accompagne d'un dépôt de silicium à la surface de l'acier. Le silicium a un rôle de liant entre l'acier et l'émail entraînant une augmentation de l'adhérence.

L'émail selon l'invention permet:
- d'éviter la suroxydation des rives des bobines au cours du refroidissement, le refroidissement lent à l'abri de l'air favorisant la formation du FeO sans formation d'hématite et de phénomène du type cloques à chaud,
- de réduire le temps de décapage des bobines d'acier par un facteur d'environ 2,
- d'éviter l'encrassement des rouleaux, l'émail étant éliminé du fait de sa faible adhérence à l'acier.
- d'éviter la pollution du bain de décapage des bandes d'acier, la composition du verre étant à base d'oxyde de fer.

## Revendications

1. Procédé de traitement limitant la suroxydation des rives d'une bande de tôle laminée à chaud et bobinée en sortie d'un train à bande, **caractérisé en ce qu'**on projette sur les parties latérales de la bobine, appelées tranches, une poudre de verre fondant lors de son contact avec la bobine d'acier en sortie du laminage à chaud qui se solidifie, la bande de tôle étant en refroidissement à une température inférieure à la température de bobinage, le refroidissement de la bande assurant la solidification d'un émail étanche en surface des tranches de bobine et l'étanchéité à l'air de l'espace contenu entre les spires de la bobine.

2. Procédé selon la revendication 1, **caractérisé en ce que** la poudre vitrifiable formant l'émail est un verre dont la composition est la suivante :
| | | |
|---|---|---|
| 10% | < Fe₂O₃ | < 50%, |
| 10% | < Na₂B₄O₇ | < 80%, |
| 0% | < P₂O₅ | < 10%, |
| 5% | < SiO₂ | < 50%, |
| 0% | < TiO₂ | < 15%, |
| 5% | < Na₂CO₃ | < 20%, |
| 5% | < K₂CO₃ | < 20%, |
| 0% | < CaCO₃ | < 10%. |

3. Procédé selon la revendication 2, **caractérisé en ce que** la poudre vitrifiable est mélangée avec un composé assurant à ladite poudre un comportement électrostatique et évitant l'adsorption d'eau.

4. Procédé selon la revendication 3, **caractérisé en ce que** la poudre vitrifiable formant émail est un verre dont la composition est la suivante :
| | |
|---|---|
| Fe₂O₃ | 30%, |
| Na₂B₄O₇ | 15%, |
| P₂O₅ | 3%, |
| SiO₂ | 15%, |
| TiO₂ | 9%, |
| Na₂CO₃ | 11%, |
| K₂CO₃ | 15%, |
| CaCO₃ | 2%. |

## Patentansprüche

1. Behandlungsverfahren zur Beschränkung der Nachoxidation der Kanten eines warmgewalzten und am Auslaß einer Walzstraße aufgewickelten Bandstahls, **dadurch gekennzeichnet, daß** auf die seitlichen Bereiche der Rolle, die auch als Ränder bezeichnet werden, ein Glaspulver aufgespritzt wird, das im Kontakt mit der sich verfestigenden Stahlrolle am Ende des Warmwalzvorgangs schmilzt, wobei sich die Stahlrolle auf eine Temperatur unter der Temperatur beim Aufwickeln abkühlt und durch das Abkühlen des Bandstahls sichergestellt wird, dass ein dichtes Email an der Oberfläche der Ränder der Rolle erstarrt und der Zwischenraum zwischen den Windungen der Rolle luftdicht abgeschlossen wird.

2. Verfahren nach Anspruch 1, **dadurch gekennzeichnet, daß** das glasartig erstarrende Pulver, das das Email bildet, ein Glas mit der folgenden Zusammensetzung ist:
| | | |
|---|---|---|
| 10 % | < Fe₂O₃ | < 50 %, |
| 10 % | < Na₂B₄O₇ | < 80 %, |
| 0 % | < P₂O₅ | < 10 %, |
| 5 % | < SiO₂ | < 50 %, |
| 0 % | < TiO₂ | < 15 %, |
| 5 % | < Na₂CO₃ | < 20 %, |
| 5 % | < K₂CO₃ | < 20 %, |
| 0 % | < CaCO₃ | < 10 %, |

3. Verfahren nach Anspruch 2, **dadurch gekennzeichnet, daß** das glasartig erstarrende Pulver mit einer Verbindung vermischt wird, die dem Pulver ein elektrostatisches Verhalten gibt und durch das die Wasseradsorption vermieden wird.

4. Verfahren nach Anspruch 3, **dadurch gekennzeichnet, daß** das glasbildende Pulver, das das Email bildet, ein Glas mit der folgenden Zusammensetzung ist:
| | |
|---|---|
| Fe₂O₃ | 30 %, |
| Na₂B₄O₇ | 15%, |
| P₂O₅ | 3 %, |
| SiO₂ | 15 %, |
| TiO₂ | 9 %, |
| Na₂CO₃ | 11 %, |
| K₂CO₃ | 15 %, |
| CaCO₃ | 2 %. |

## Claims

1. Treatment method limiting the overoxidation of the edges of a strip of hot-rolled strip coiled on leaving a strip mill, **characterized in that** a glass powder is sprayed onto the lateral parts of the coil, called the sides, which glass powder melts when it comes into contact with the steel coil after hot rolling and which solidifies, the strip of sheet being, upon cooling, at a temperature below the coiling temperature, the cooling of the strip ensuring that an impermeable enamel solidifies on the surface of the sides of the coil and that the space contained between the turns of the coil is airtight.

2. Method according to Claim 1, **characterized in that** the vitrifiable powder forming the enamel is a glass whose composition is as follows:
| | | |
|---|---|---|
| 10% | < Fe₂O₃ | < 50%, |
| 10% | < Na₂B₄O₇ | < 80%, |
| 0% | < P₂O₅ | < 10%, |
| 5% | < SiO₂ | < 50%, |
| 0% | < TiO₂ | < 15%, |
| 5% | < Na₂CO₃ | < 20%, |
| 5% | <K₂CO₃ | < 20%, |
| 0% | <CaCO₃ | < 10%. |

3. Method according to Claim 2, **characterized in that** the vitrifiable powder is mixed with a compound providing the said powder with electrostatic behaviour and preventing the adsorption of water.

4. Method according to Claim 3, **characterized in that** the vitrifiable powder forming the enamel is a glass whose composition is as follows:
| | |
|---|---|
| Fe₂O₃ | 30%, |
| Na₂B₄O₇ | 15%, |
| P₂O₅ | 3%, |
| SiO₂ | 15%, |
| TiO₂ | 9%, |
| Na₂CO₃ | 11%, |
| K₂CO₃ | 15%, |
| CaCO₃ | 2%. |
